# EUROPEAN PATENT SPECIFICATION

(11) **EP 1 512 325 B1**
(45) Date of publication and mention of the grant of the patent: **29.11.2006**
(21) Application number: 04255268.7
(22) Date of filing: 01.09.2004
(51) Int. Cl.: A23J 3/16, A23L 1/164, A23G 1/44, A23G 3/00, A23G 3/32

(54) **Confectionery products comprising deflavoured soy protein material obtainable by a specific method**
Süsswaren enthaltend geruchsneutralisierte Sojaprotein-Zusatzstoffe erhältlich mittels ein spezifisches Verfahren
Produits de confiserie comprenant des protéines de soja avec une odeur et un goût neutralisés susceptibles d'être obtenus d'après un procédé spécifique

(30) Priority: 04.09.2003 US 655250
(43) Date of publication of application: 09.03.2005
(73) Proprietor: KRAFT FOODS HOLDINGS, INC., Northfield, Illinois 60093 (US)
(72) Inventor: Akashe, Ahmad, Mundelein, Illinois 60060 (US); Meibach, Ronald Louis, Deerfield, Illinois 60015 (US); Coleman, Edward Charles, New Fairfield, Connecticut 06812 (US)
(74) Representative: Smaggasgale, Gillian Helen

(56) References cited:
- WO-A-02/100186
- WO-A-03/070007
- US-A- 3 995 071
- US-A- 4 088 795
- US-A- 4 420 425
- US-A1- 2002 051 835
- US-A1- 2002 102 339

## Description

### BACKGROUND OF THE INTENTION

This invention relates generally to the processing of soy-derived materials for use in various food products, especially confectionary type products. More particularly, the invention relates to a method of deflavoring soy materials in order to make them acceptable in a wide range of foods, including confectionary type products such as nutritional bars.

In recent years, soy proteins have become widely used in food products, for the health benefits to be obtained from their use. In some applications, the taste of the soy materials is not objectionable. However, in some uses, such as dairy analog products, beverages and the like, the flavors found in soy materials may prevent their ready acceptance by the consumer. Thus, in order to extend the uses of soy materials, the present inventors wanted to find a method of reducing the flavor components of soy materials. However, it was not evident that methods which had been used previously to remove flavor components from other organic materials would be successful in the treating of soy materials. Organic materials, since they have complex compositions, must be tested to determine whether any given method of treating them will be satisfactory.

One example of previously employed methods to purify organic materials is found in U.S. Patent 4,477,480, in Which the patentees show that starch can be treated with an alkali to remove objectionable flavor components. In a commonly assigned patent, U.S. Patent 4,761,186, ultrafiltration is used to purify starch. In both cases, flavor components are removed from the starch, in the '480 patent by solubilizing the flavor components so that they can be washed out of the relatively insoluble starch. In the '186 patent, ultrafiltration was used to remove the flavor components as permeate, while the insoluble starch remained in an aqueous slurry. By contrast, the present invention separates flavor components from soluble high molecular weight soy proteins.

There are many articles and patents which relate to processing soy materials in order to recover the protein content and which at the same time reduce the flavor compounds to make the proteins more acceptable in food products. However, these previous disclosures were not specifically directed to removal of flavoring compounds and recovering as much of the protein as possible. One example is U.S. Patent 4,420,425 in which protein components of soy are solubilized at a pH of 7 to 11, preferably about 8 and, after ultrafiltration through a membrane having a molecular weight cut off above 70,000, are recovered by spray drying the retained soy proteins. In variants, only a portion of the protein is solubilized at lower pH values and subjected to ultrafiltration with a membrane having a cutoff preferably above 100,000 molecular weight, the product was found to have improved color and flavor. A higher cutoff valve would be expected to result in a loss of valuable proteins. In another patent, U.S. Patent 5,658,714, a soy flour slurry is pH-adjusted to the range of 7 to 10 to solubilize proteins, which are then passed through an ultrafiltration membrane and phytate and aluminum are retained, presumably as solids. While the molecular weight cutoff of the membrane was not given, it is assumed that the pore size was large in order to be able to pass the soluble proteins. Both of these patents contain extensive discussions of the efforts of others in the processing of soy materials; neither teaches or suggests the control of pH during the ultrafiltration process.

In a group of related patents, Mead Johnson Company disclosed processes for solubilizing soy proteins by raising the pH of an aqueous solution of soy materials and recovering the proteins which are said to have a bland taste. The processes are principally directed to concentrating proteins rather than removing flavor compounds. In U.S. Patent 3,995,071, the pH was increased to 10.1 to 14 (preferably 11 to 12) to solubilize soy proteins, after which the pH was lowered to about 6 to 10 and ultrafiltration with a membrane having a molecular weight cutoff of 10,000 to 50,000 Daltons was used to retain the proteins while discarding carbohydrates and minerals. In U.S. Patent 4,072,670, emphasis was placed on removing phytates and phytic acid by solubilizing proteins at a pH of 10.6 to 14 and a temperature of 10 to 50°C to make the phytates and phytic acid insoluble, then separating them and finally acidifying the solution to a pH of about 4 to 5 to precipitate the soy proteins. In U.S. Patent 4,091,120 soy proteins were solubilized at a pH less than 10, preferably 7 to 9 and ultrafiltration was used to separate the proteins as retentate, while passing carbohydrates as permeate. These patent do not teach or suggest control of the pH during the ultrafiltration process.

The present inventors wanted to remove compounds in soy materials which contribute color and flavor and which interfere with the use of soy in certain food products such as beverages, dairy analogs, and the like. They have found that soy-derived materials can be treated successfully using the process to be described below, recovering substantially all of the proteins and rejecting the compounds which cause undesirable color and flavor. Moreover, by controlling the pH within the range of about 9 to about 12 during the ultrafiltration process, deflavored soy materials having improved functional properties can be obtained. Thus, the product is suitable for many food products.

WO02/100186 discloses a modified oil seed material formed from oil seed-based materials. The modified oil seed material can be utilized in a variety of nutritional applications, including the preparation of protein supplemented food beverages such as beverages, processed meats, frozen deserts, confectionery Products, dairy type products and cereal grain products. The modified oil seed material typically includes at least 85 wt.% protein (dry solids basis), at least about 40 wt.% and the protein in the modified oil seed material has an apparent molecular weight of at least 300 kDA and/or the modified oil seed material has a mw50 of at least about 200 kDA,

WO03/07007 discloses protein-containing particles with a high eating quality characterized by having a high content of exogenous protein and optionally a phospholipids and/or raw fibers. This document also discloses a method for manufacturing protein-containing particles with a high eating quality characterized by having a high content of exogenous proteins and optionally a phospholipids and fibers.

### SUMMARY OF THE INVENTION

Broadly, the invention is a process for preparing an aqueous soy composition having a soy concentration of about 1 to about 20 percent, which is pH-adjusted to solubilize the protein content and to release the flavoring compounds. Then the composition is subjected to ultrafiltration, while maintaining pH control, using a membrane capable of retaining substantially

US-A-2002 102 339 teaches a method of deflavouring soy-derived materials, comprising solubilising the soy proteins by adjusting an aqueous composition comprising them to a pH in the range of 9 to 12 and releasing said flavoring compounds, passing the pH-adjusted aqueous composition adjacent an ultrafiltration membrane wherein said flavour compounds pass through said membrane, thereby deflavoring said soy material and retaining substantially all of said solubilised soy proteins. all of the protein content of the soy while removing flavoring components as permeate.

The deflavored soy materials prepared by the present methods are ideally suited for use in dairy and non-dairy beverages, smoothies, health drinks, confectionary type products, nutritional bars, cheeses, cheese analogs, dairy and non-dairy yogurts, meat and meat analog products, cereals, baked products, snacks, and the like. Confectionary type products include nutritional bars wherein the deflavored soy proteins are dispersed throughout the nutritional bars. Especially preferred confectionary type products include products, especially nutritional bars, wherein the deflavored soy proteins are contained in confectionary layers or solid bits (e.g., chocolate or caramel layers or bits) dispersed within the products. By using confectionary layers or discrete solid bits to contain the deflavored soy protein, better control of texture can be obtained.

In one embodiment, the present invention provides a soy-containing confectionary product comprising a deflavored soy protein material, wherein the deflavored soy protein material is prepared by a method comprising:
(a) preparing an aqueous composition of a soy material containing soluble soy proteins, flavoring compounds, and insoluble materials;
(b) solubilizing the soy proteins by adjusting the aqueous composition of (a) to a pH in the range of about 9 to about 12 and releasing the flavoring compounds;
(c) passing the pH-adjusted aqueous composition of (b) adjacent an ultrafiltration membrane having a molecular weight cutoff up to about 50,000 Daltons, while maintaining the pH in the range of about 9 to about 12, under suitable ultrafiltration conditions wherein the flavor compounds pass through the membrane, thereby deflavoring the soy material and retaining substantially all of the solubilized soy proteins; and
(d) recovering the solubilized soy proteins retained by the ultrafiltration membrane, wherein the recovered solubilized soy proteins is the deflavored soy protein material.

In another embodiment, the present invention provides a method of preparing a soy-containing confectionary product comprising a deflavored soy protein material, said method comprising preparing the confectionary product such that the deflavored soy protein material is dispersed within one or more discrete layers covering or within the confectionary product or within a plurality of discrete components dispersed throughout the confectionary product, wherein the discrete layer or plurality of components do not adversely effect texture of the confectionary product;
wherein the deflavored soy protein material is prepared by a method comprising:
(a) preparing an aqueous composition of a soy material containing soluble soy proteins, flavoring compounds, and insoluble materials;
(b) solubilizing the soy proteins by adjusting the aqueous composition of (a) to a pH in the range of about 9 to about 12 and releasing the flavoring compounds;
(c) passing the pH-adjusted aqueous composition of (b) adjacent an ultrafiltration membrane having a molecular weight cutoff up to about 50,000 Daltons, while maintaining the pH in the range of about 9 to about 12, under suitable ultrafiltration conditions wherein the flavor compounds pass through the membrane, thereby deflavoring the soy material and retaining substantially all of the solubilized soy proteins; and
(d) recovering the solubilized soy proteins retained by the ultrafiltration membrane, wherein the recovered solubilized soy proteins is the deflavored soy protein material.

In one aspect, the invention is a method of deflavoring soy-derived materials such as soy milk, soy flour, soy concentrates, and soy protein isolates, which method includes preparing an aqueous composition of the soy material containing flavoring compounds, adjusting the pH to the range of about 9 to 12 to solubilize the protein content of the soy material and release the flavor components, and then passing the pH-adjusted composition adjacent to an ultrafiltration membrane having pores which provide a molecular weight cutoff up to 50,000 Daltons, while maintaining the pH in the range of about 9 to about 12, thus retaining substantially all of the protein content, while passing through the pores the flavor producing compounds.

In another aspect, the invention includes adjusting the pH to the range of about 9 to 12 with an alkali such as sodium, potassium or calcium hydroxides to solubilize the protein content and releasing the flavor compounds, making it possible to separate such compounds by ultrafiltration. Importantly, the pH is also controlled within the range of about 9 to about 12 during the ultrafiltration process.

In one embodiment, the invention is a method for deflavoring soy materials in a continuous process wherein a pH-adjusted aqueous mixture of soy materials is passed adjacent an ultrafiltration membrane to separate the flavor components. The pH is maintained at about 9 to about 12 during the ultrafiltration by the addition of the appropriate amount of an appropriate pH-altering material (generally a base). The permeate containing flavor components and water is passed adjacent a reverse osmosis membrane to dewater the permeate and the separated water is recycled to join recycled retentate and fresh pH-adjusted soy materials. A portion of the retentate is continually removed and the deflavored soy materials recovered.

In a preferred embodiment, the invention is a method for deflavoring soy materials in a batch or semi-continuous process wherein a pH-adjusted aqueous mixture of soy materials is passed adjacent an ultrafiltration membrane, the permeate is separated for recovery of the flavor components, and the retentate is recycled to join fresh pH-adjusted soy materials. Water is added periodically or continuously to replace the water lost to the permeate and to adjust the concentration of soy materials in the combined stream to a predetermined level. If necessary, a pH-altering material (e.g., a base) can be added to the recycled retentate or added water to control the pH to the desired range during the ultrafiltration process. The process is continued until all of the flavoring compounds have been removed.

In another preferred embodiment, the present invention provides a method for preparing deflavored soy protein material, said method comprising:
(a) preparing an aqueous composition of a soy material containing soluble soy proteins, flavoring compounds, and insoluble materials;
(b) solubilizing the soy proteins by adjusting the aqueous composition of (a) to a pH in the range of about 9 to about about 12 and releasing the flavoring compounds;
(c) removing the insoluble materials from the pH-adjusted aqueous composition of (b) to obtain a treated aqueous composition;
(d) passing the treated aqueous composition of (c) adjacent an ultrafiltration membrane having a molecular weight cutoff up to about 50,000 Daltons, while maintaining the pH in the range of about 9 to about 12, under suitable ultrafiltration conditions wherein the flavor compounds pass through the membrane, thereby deflavoring the soy material and retaining substantially all of the solubilized soy proteins; and
(e) recovering the solubilized soy proteins retained by the ultrafiltration membrane to obtain the deflavored soy protein material.

The ultrafiltration membrane used in the method of the invention will have a molecular weight cutoff up to 50,000 Daltons, preferably 1,000 to 50,000, most preferably about 10,000 and preferably is a polyethersulfone or ceramic membrane.

### BRIEF DESCRIPTION OF THE DRAWING

FIG. 1 is a graph of the intensity of soy flavor attributes.
FIG. 2 is a graph of the intensity of deflavored soy milk compared to a control sample.
FIG. 3 is a graph of the intensity of another group of soy flavor attributes.
FIG. 4 is a graph of the intensity of deflavored soy concentrate and a control sample compared to the sample of FIG. 3.
FIG. 5 is a graph of the intensity of deflavored soy concentrate and a control sample.
FIG. 6 is a graph showing the change in concentration of flavor compounds between a deflavored soy sample and a control sample.
FIG. 7 is a graph showing the change in concentration of flavor compounds between a deflavored soy sample and a control sample.
FIG. 8 is a block diagram of one process employing the invention.
FIG. 9 is a graph of the intensity of soy isolate flavor attributes.
FIG. 10 is a graph of the intensity of deflavored soy isolate compared to a control sample.
FIG. 11 is a block diagram of a preferred embodiment for preparing the deflavored soy protein material.

### DESCRIPTION OF THE PREFERRED EMBODIMENTS

**Soy-Derived Materials**. Soybeans are valuable sources of oil and, in the present invention, of proteins. Soy beans contain about 40 percent proteins, which have been classified after ultracentrifugation as 2S, 7S, 11S and 15S (see also U.S. Patent 4,420,425). These fractions may contain other materials as well and they have a wide moleoular-weight range, from 3,000 to 600,000. It is well known that soy products have undesirable odors and flavors which should be removed in order to make the soy materials widely useful in food products. It is believed that lipoxygenases catalyze the oxidation of certain polyunsaturated fatty acids, producing hydroperoxides which are degraded into volatile carbonyl compounds, associated with objectionable odors and flavors in soy-derived materials. Some of the compounds associated with soy flavors are described in Table C in Example 10 below.

While the protein content of soy-derived materials is considered a valuable fraction for use in food products, soluble carbohydrates are considered undesirable. Their removal from soy protein fractions is an objective in many processes in which the proteins are recovered.

Phytates are compounds which also are considered undesirable in soy proteins. These compounds are calcium-magnesium-potassium salts of inositol hexaphosphoric acid. Such compounds are believed to chelate metal ions and are not readily absorbed by the human body. They are considered to bind to soy proteins and interfere with digestion. As mentioned above, removal of phytates has been an objective of workers in the field of soy-derived materials.

**Ultrafiltration Membranes**. Filtration is used to separate many materials. In the present invention, ultrafiltration is used to remove flavoring compounds from soy-derived materials. Importantly, the pH of the soy-derived material should be maintained in the range of about 9 to about 12 during the ultrafiltration process. Ultrafiltration is intended to remove particles having a size between 10 to 1,000 Angstroms (0.001 to 0.1 µm), corresponding generally to particles having a molecular weight between 10,000 and 1,000,000, and which may also be affected by the shape of such high molecular weight particles. Soy proteins have molecular range between about 3,000 and 600,000. A membrane may be chosen which is capable of passing all of the soy proteins or only a selected portion. In the present invention, the soy proteins are retained by the ultra filtration membrane under the selected operating conditions, while the lower molecular weight flavoring compounds pass through the membrane and are separated, thus improving the color and flavor of the retained soy proteins and associated solids.

A polymer ultrafiltration membrane may be defined as an anisotropic (non-uniform) layer. One face is a skin containing pores which determine the size of molecules which can pass through the membrane. Supporting the surface skin is a spongy structure which extends to the opposite face. Such membranes are commonly made by coagulation of polymers in an aqueous bath. Typical polymers which are used include polysulfones, cellulose esters, poly(vinyldenefluoride), poly(dimethylphenylene oxide), poly (acrylonitrile), which can be cast into membranes. Often, the membranes are formed into hollow tubes which are assembled into bundles, through which the solution to be filtered is passed. Alternatively, flat membrane sheets and spiral designs may be used. In commercial practice, pressure is applied to facilitate movement of the lower molecular weight compounds through the membrane. The membrane must be able to withstand the pressures used, making it important that the spongy supporting structure be uniform to avoid breaking the surface skin and bypassing the membrane.

In addition to the polymeric membranes just described, other materials have been used to make ultrafiltration membranes, such as ceramics, sintered metals, and other inorganic materials. The present invention is not limited to any particular type of membrane. In general, the membrane must be able to pass the flavoring compounds, which are believed to have molecular weights lower than 1,000 Dalton. More importantly, the membranes must be able to retain substantially all of the solubilized soy proteins. Thus, the membrane of the invention will have a molecular weight cutoff up to about 50,000 Daltons, preferably about 1,000 to 50,000, more preferably 10,000 to 30,000.

**Process**. The process of the invention includes the following steps:
(1) Prepare an aqueous mixture of the soy-derived material;
(2) Add a base to raise the pH of the aqueous mixture to about 9 to about 12 in order to solubilize the soy proteins and to release the flavoring compounds;
(3) Pass the pH-adjusted mixture, while maintaining the pH in the range of about 9 to about 12, adjacent to an ultrafiltration membrane having a molecular weight cutoff up to about 50,000 Daltons, remove the flavoring compounds as permeate, and remove the remaining soy proteins and other soy materials as retentate; and
(4) Neutralize the retentate and recover the soy proteins.

All types of soy materials are considered to be potential sources of soy for use in food products. Thus, soy materials which contain proteins are combined into an aqueous mixture, generally a slurry of soy solids. The protein content is needed for food products, but as discussed above, it is believed to contain flavoring compounds which must be released in order that they can be separated. The separation of flavoring compounds is carried out in an aqueous mixture in which both the proteins and flavoring compounds are dissolved. The concentration of the soy material in the aqueous mixture will be in the range of about 1 to about 20 percent. Generally, the concentration of soy materials after pH adjustment will change during the subsequent ultrafiltration step as water is removed with the permeate. The water will be replaced either periodically or continuously. For example, in diafiltration water is added to gradually dilute the retained proteins in a batch or semi-continuous process.

The second step, as will be seen in the examples, is important if removal of the flavoring compounds is to be accomplished. The soy proteins are solubilized by adding a base to the aqueous mixture to achieve a pH of about 9 to 12. In general, it has been found that a pH of 9 is needed to solubilize all of the proteins, while a pH higher than 12 is likely to cause undesirable degradation of the proteins. While in theory, any base might be used, sodium or potassium hydroxide are preferred, particularly potassium hydroxide. Other bases which may have application include calcium, magnesium and ammonium hydroxides. It is believed that solubilizing the soy proteins changes their shape and in some manner results in releasing the flavoring compounds, which may be bound or encapsulated by the soy proteins when they are in a neutral or acid solution. The flavoring compounds, which have relatively low molecular weight compared to the soy proteins are able to pass through the pores of the ultrafiltration membrane, while substantially all of the solubilized soy proteins are too large and are retained. Importantly, the pH should be maintained within the just described range (i.e., about 9 to about 12) during the ultrafiltration/diafiltration process to allow as much of the flavoring compounds as possible to be removed.

The third step could be carried out in a batch manner similar to the laboratory experiments reported below in Examples 1-5 in which the flavor compounds and water passed through the membrane and were removed by flowing water. However, in commercial applications of the process of the invention, the pH-adjusted aqueous mixture would be circulated continuously adjacent to an ultrafiltration membrane. Since water, the caustic and the flavoring compounds pass through the membrane as permeate and are discarded, additional water will be added to maintain the desired concentration of soy materials, which will tend to lower the pH of the aqueous mixture. This water may be augmented by dewatering the permeate and recycling the recovered water to the feed stream. A pH-modifying material (e.g., base) can be added as necessary to control the pH in the desired range (i.e., about 9 to about 12) directly to the ultrafiltration solution, to any recycled aqueous material, or to makeup water as desired.

After removal of the flavoring compounds (i.e., after completion of the ultrafiltration process), further neutralization of the filtered solution may be accomplished by withdrawing product and adding an acid as required to reach the desired pH. After pH adjustment, the aqueous mixture of soy proteins and other materials may be used directly in food products, or it may be concentrated or dried as required for the intended use.

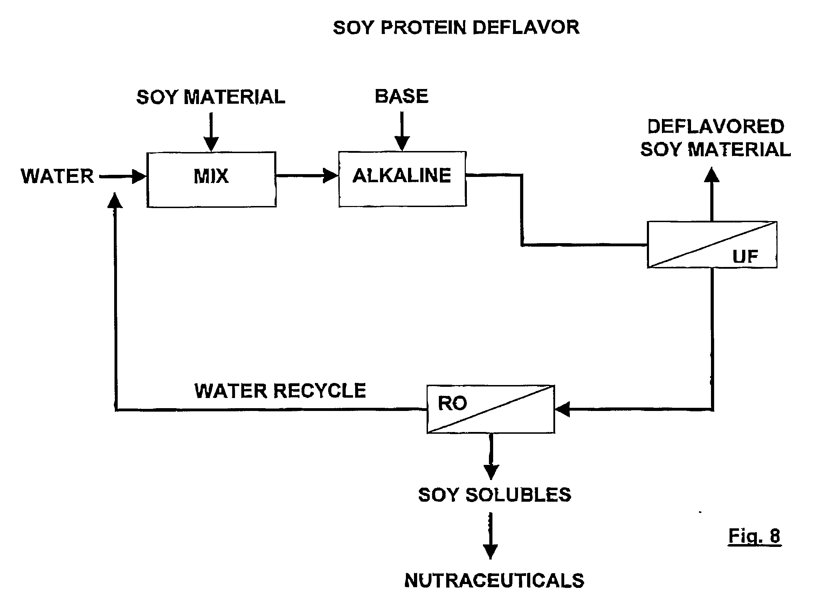

A process for deflavoring soy materials by ultrafiltration may be operated in various ways. The pH during the ultrafiltration/diafiltration process is maintained in the range of about 9 to about 12, and preferably in the range of about 9.5 to about 10.5. Two methods will be described, continuous processing and batch (including sami-continuous operation) processing. It is expected that commercial processes will adopt batch or seml-conflnuous operation, which should be better suited to production of food-grade soy products. A continuous process is generally shown in FIG. 8. In either a continuous or batch process an aqueous mixture of soy materials is pH adjusted to solubilize soy proteins and release flavor compounds and then passed adjacent an ultrafiltration membrane which permits the lower molecular weight flavoring materials to pass through its pores along with water (the permeate), leaving the higher molecular weight soy materials (the retentate) to be recirculated. A portion of the retentate will be withdrawn as deflavored product, from which the soy materials can be recovered as needed for the ultimate end use. Water will be added to replace that lost in the permeate and to provide a constant concentration of soy materials in the feed stream supplied to the ultrafiltration membrane. Although not essential to the process, the process of FIG. 8 includes additional processing of the permeate to recover a portion of the water using a reverse osmosis membrane for recycling to join the retentate and fresh soy materials. The advantage of such a step is in reducing the amount of fresh water which must be added to the process and removed in concentrating the permeate. Of course, the pH of the soy-derived materials can be kept within the desired range by appropriate addition of a base to the recycled or fresh water added to the process or by direct addition of base as desired.

In a batch process, such as those described in Examples 6-8 below, a batch of soy material is placed in a vessel, pH adjusted, and fed to an ultrafiltration membrane. The permeate is separated and the retentate is returned to the vessel. As the process proceeds, the soy material is depleted in the lower molecular weight flavoring compounds and water and becomes more concentrated in the desirable soy proteins. Periodically, water is added to the retentate to dilute it and provide a carrier for the flavoring compounds which are passed through the membrane. In a semi-continuous process the water is added continuously at the rate it is being removed in the permeate. The process is continued until all of the flavoring compounds have been removed and the retentate is sufficiently deflavored to become the product, which can be further processed as required for the ultimate end use. A batch or semi-continuous process may also include the concentration of the permeate, with recycle of separated water in a similar manner as that shown in FIG. 8. The pH during the ultrafiltration/diafiltration process is maintained in the range of about 9 to about 12, and preferably in the range of about 9.5 to about 10.5.

The ultrafiltration membrane will be operated with a pressure differential across the membrane which assists migration of the flavoring compounds, water and other materials which are capable of passing through the pores of the membrane, while not exceeding the physical strength of the membrane. Typical average pressure for such membranes are about 50 psi (345 kPa). The trans-membrane pressure (in versus out) will be about 15 psi (103 kPa). The flow rate of the feed stream will provide sufficient residence time for significant permeate removal, but also will be high enough to provide turbulence so that the access of the feed stream to the membrane pores will not be hindered by solid deposits on the membrane walls. One skilled in the art will understand that suitable operating parameters will be determined by experience with the materials being separated.

In a preferred embodiment, the present invention provides a method for preparing deflavored soy protein material, said method comprising: (a) preparing an aqueous composition of a soy material containing soluble soy proteins, flavoring compounds, and insoluble materials; (b) solubilizing the soy proteins by adjusting the aqueous composition of (a) to a pH in the range of about 9 to about 12 and releasing the flavoring compounds; (c) removing the insoluble materials from the pH-adjusted aqueous composition of (b) to obtain a treated aqueous composition; (d) passing the treated aqueous composition of (c) adjacent an ultrafiltration membrane having a molecular weight cutoff up to about 50,000 Daltons, while maintaining the pH in the range of about 9 to about 12, under suitable ultrafiltration conditions wherein the flavor compounds pass through the membrane, thereby deflavoring the soy material and retaining substantially all of the solubilized soy proteins; and (e) recovering the solubilized soy proteins retained by the ultrafiltration membrane to obtain the deflavored soy protein material. This preferred embodiment is described in more detail in copending U.S. Patent Application Serial Number 10/655,259 filed on the same day as the present application.

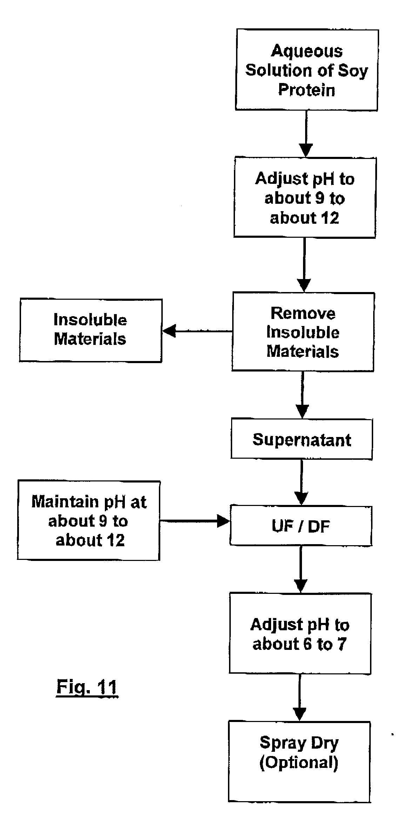

This preferred embodiment is also illustrated in FIG. 11, wherein the pH of an aqueous solution of soy protein is adjusted to about 9 to about 12. The pH-adjusted aqueous solution is then treated to remove insoluble materials. Any conventional technique (e.g., filtration, decantation, centrifugation, and the like) can be used. Preferably, the insoluble material is removed by centrifugation. Commercial available continuous centrifugation units are ideally suited for this separation in a semi-batch or continuous type operation. In an especially preferred embodiment, the pH-adjusted aqueous solution is subjected to the removal technique (e.g., centrifugation) at least twice in order facilitate or more complete removal of insoluble materials. The treated supernatant is then subjected to ultrafiltration, preferably combined with diafiltration, in order to remove the flavor components normally associated with soybeans. During ultrafiltration, the pH of the soy-derived material should be maintained in the range of about 9 to about 12. After ultrafiltration, the pH is adjusted to a neutral pH using an edible acid (e.g., citric acid). The deflavored soy protein solution may be used directly or it may be converted to a solid form if desired. Any conventional technique for removing water can be used. Generally, spray or freeze drying techniques are preferred.

**Deflavored Soy Products.** The deflavored soy materials prepared by the present methods are ideally suited for use in dairy and non-dairy beverages, smoothies, health drinks, confectionary type products, nutritional bars, cheeses, cheese analogs, dairy and non-dairy yogurts, meat and meat analog products, cereals, baked products, snacks, and the like. Especially preferred confectionary products include candies, nutritional bars, cookies, and the like. Such confectionary products are generally prepared by combining the deflavored soy milk prepared by the methods described herein with the confectionary product. The confectionary products of the present invention may also include sweeteners and other desired ingredients including, for example, flavors (e.g., cocoa, vanilla, chocolate, milk, and the like), nutritional additives (e.g., vitamins, minerals, and the like), fruit, colorants, processing aids (e.g., gums, emulsifiers, and the like), edible acids, and the like). Generally, optional ingredients such as flavors, nutritional additives, colorants, processing aids and the like are present at 0 to about 5 percent.

Preferably the deflavored soy material used in the present invention is a solid material prepared from soy protein isolate or concentrate using the deflavored process described herein. The deflavored soy materials prepared by the present methods are generally obtained in aqueous slurry compositions. For use in the present confectionary products, these aqueous slurry compositions are preferably treated to remove water to form a solid composition. Suitable methods for water removal include evaporation, freeze drying, spray drying, and the like. Generally spray drying is preferred. Even more preferably, the density of the deflavored soy material is about 0.4 to about 0.9 g/ml.

Generally the confectionery products of this invention of this invention contain about 0.5 to about 50 percent of the deflavored soy protein, and more preferably about 1 to about 30 percent. Especially preferred confectionary products include nutritional bars comprising a core and at least one chocolate or caramel layer. For purposes of this invention, a layer" is intended to mean a discrete layer either covering a product or extending through a product or discrete particles or bits within a product. Thus, a layer could include a chocolate layer covering or enrobing a nutritional bar, a discrete chocolate layer through or within a nutritional bar, and/or chocolate particles or bits within a nutritional bar. Preferably the deflavored soy proteins are contained within such layers (e.g., chocolate or caramel layers or particles) in order to offset the tendency of the deflavored soy material to bind water due to their high water binding capacity. Because of their high water binding capacity, the deflavored soy materials, if placed in the core of such nutritional bars, would tend, over time, to adversely effect the texture of the nutritional bar (i.e., becoming too firm or hard) and, thereby, limiting the shelf life. By incorporating the deflavored soy materials within the chocolate and/or caramel components, this problem is essentially overcome. Thus, nutritional bars containing deflavored soy material in the chocolate and/or caramel layers have shelf lives on the order of greater than about 9 months at ambient temperatures.

Chocolate and caramel compositions containing the deflavored soy material of this invention have good meltability, flowability, and organoleptic properties. Although such chocolate and caramel compositions are ideally suited for use in confectionary products such as nutritional bars, they may also be used in other confectionary products such as candy, candy bars, icing, cookies, ice cream, other frozen dairy products, and the like.

Generally the confectionery products of this invention also contains about 0.5 to about 75 percent sweetener, and preferably about 10 to about 50 percent sweeteners. Sweeteners that can be used to prepare the beverage of this invention include both natural and artificial sweeteners. Examples of such sweeteners include natural sugars such as sucrose, fructose, glucose, maltose, high fructose corn syrup, and lactose and artificial sweetening agents such as saccharin, aspartame, acesulfame potassium, and sucralose, Of course, others sweeteners normally used in food processing can be used if desired. Other ingredients normally used in confectionary type products may also be included in the confectionary products of this invention.

Unless noted otherwise, all percentages are by weight.

**EXAMPLE 1.** Soy protein isolate (Protein Technology International (PTI); St. Louis, MO) was hydrated in tap water to provide a concentration of 10 percent. The aqueous composition was mixed with a magnetic stirrer until all of the soy protein isolate was completely dispersed. The pH of the mixture was adjusted to 11.0 using sodium hydroxide. Then, the pH-adjusted composition was placed in a dialysis tube (Spectrum, Inc.) having a 3500 molecular weight pore size and tap water was passed over the outside of the tube continuously for about 4 hours; the pH remained greater than about 9 during dialysis. The composition remaining in the dialysis tube was poured into a glass beaker, neutralized, and evaluated for aroma and taste. A comparison was made with the dialyzed composition and a sample treated in a similar manner, but which had a pH of 6.7 and a second sample which had been neither dialyzed nor pH-adjusted. Blind evaluation by several Individuals showed that only the pH-adjusted and dialyzed sample had significantly improved taste and aroma.

**EXAMPLE 2.** A similar test was carried out using soy milk (Devansoy Farms, Carrol, Iowa) made into a 10 percent aqueous composition and then pH-adjusted and dialyzed overnight as in Example 1. After the treatment, the pH of the sample was 8.8 and the aroma and taste were significantly improved.

**EXAMPLE 3**. Example 2 was repeated with soy milk freshly prepared by soaking and blanching the beans and then grinding and separating the soy milk from the meal. After pH adjustment and dialysis as previously described, it was found that the taste and aroma of the soy milk was significantly improved.

**EXAMPLE 4.** Example 3 was repeated using a dialysis tube having a pore size of 6000 molecular weight and similar results were obtained.

**EXAMPLE 5.** Example 2 was repeated with dry soy flour (Cargill). The soy flour was hydrated to a 10 percent composition and then pH-adjusted as previously described. After dialyzing overnight the pH of the remaining composition in the dialysis tube had a pH of 8.7 and had significantly improved aroma and taste.

**EXAMPLE 6.** In a large mixing tank 33 pounds (15 kg) of Sun Rich soy milk containing 15 percent solids was diluted with 66 pounds (30 kg) of water to produce a slurry of 100 pounds (45 kg) containing 5 percent soy solids. A 1 N NaOH solution was added slowly to solubilize the soy proteins until a pH of 11 was reached.

Diafiltration of the alkalized soy solution was carried out by pumping the solution from the mixing tank through two parallel hollow fiber membranes (A/G Technology Corporation) having a molecular weight cutoff of 10,000 Daltons and a surface area of 3.3 m². The pH was maintained at about 9 to about 12 during diafiltration. The trans-membrane pressure across the membranes was 20-50 psi (138-345 kPa). The material passed through the membrane (permeate) was collected. The remaining material (retentate) was continuously recycled to the mixing tank. When 50 pounds (22.7 kg) of permeate had been collected, the mixing tank contained 50 pounds (22.7 kg) of soy solution, An additional 50 pounds (22.7 kg) of water was added to the mixing tank. This washing with addition of water to the mixing tank was repeated five times, after which the solution in the mixing tank was concentrated to about 10 percent solids as water was removed in the permeate and then the retained soy solution was neutralized with 2 percent citric acid to a pH of 7.0.

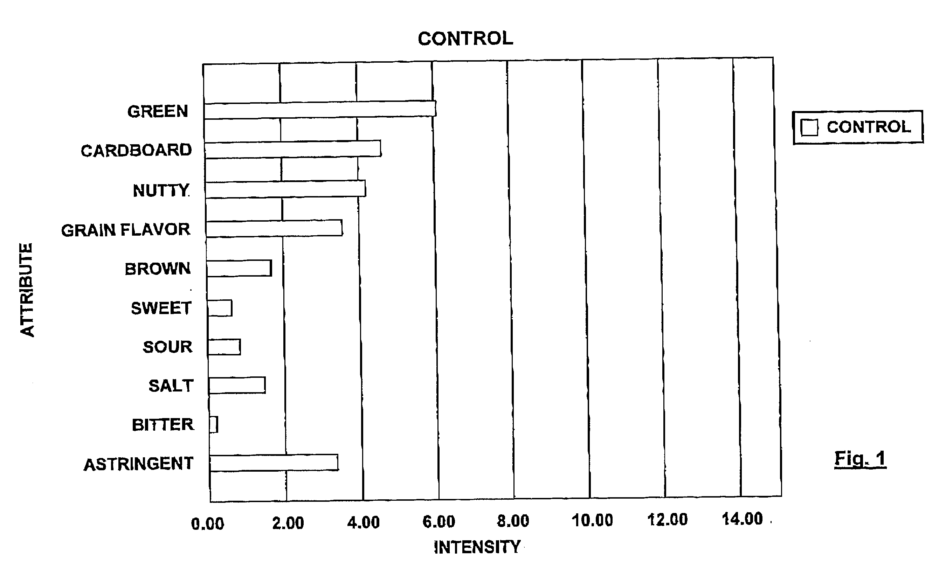

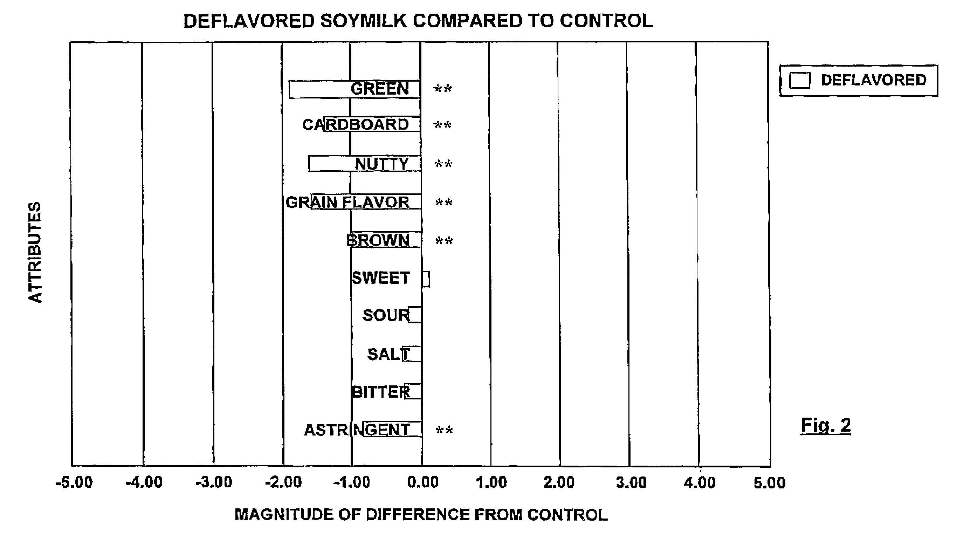

The neutralized solution was evaluated by a trained sensory panel and compared with a control sample of Sun Rich soy milk which had been diluted to 10 percent with water, but not otherwise treated. The soy solutions were presented in a blind and randomized order. The results are shown in the graphs of FIGS. 1 and 2.

FIG. 1 shows the mean intensity score for 10 attributes. The panel judged certain attributes to be more significant than others. When compared to the soy solution which had been treated as described above, the outstanding attributes had all been reduced with a 95 percent confidence level. Those attributes which had less prominent in the control (i.e., Brown, Sweet, Sour, Salt and Bitter) were reduced, except for Sweet which increased in value, but the panel mean values did not reach a 95 percent confidence level.

It is clear from the results that the soy solution had been rendered more neutral in flavor by removal of flavor components.

**EXAMPLE 7**. Ten pounds (4.55 kg) of a soy protein concentrate (Central Soya) was mixed with 190 pounds (86.4 kg) of water in a tank with high agitation for 15-30 minutes to hydrate the soy protein. Then 1 N NaOH was added to solubilize the soy protein to a pH of 11. In a similar manner to that described in Example 6 the soy slurry was pumped through a spiral membrane (Gea Niro Inc.) having a molecular weight cutoff of 10,000 Daltons. The trans-membrane pressure across the membrane was maintained below 50 psi (344.7 kPa). The pressure drop through the membrane was maintained below 15 psi (103.4 kPa) and the pH was maintained at about 9 to about 12. As In Example 6, five additions of water were made when the permeate withdrawn from the membrane reached one-half of the original volume in the mixing tank. After five water additions the pH of the washed soy solution was adjusted to 7.5 by adding 0.5 N HCl and then freeze dried for sensory evaluation.

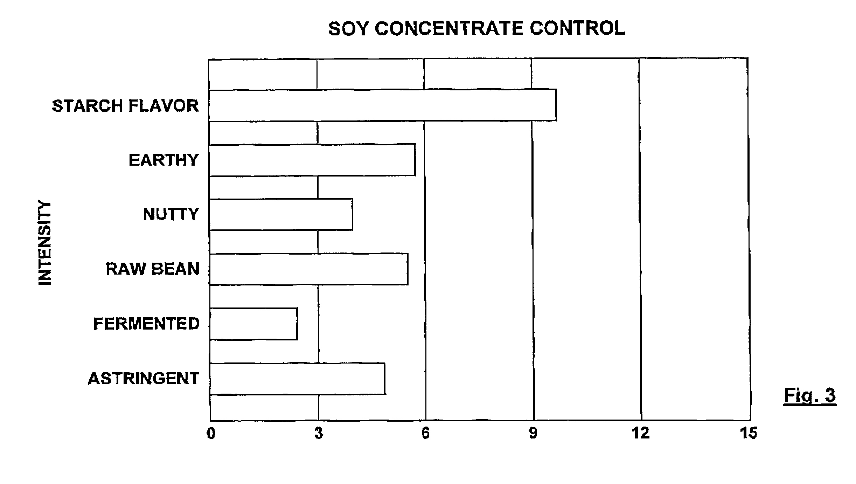

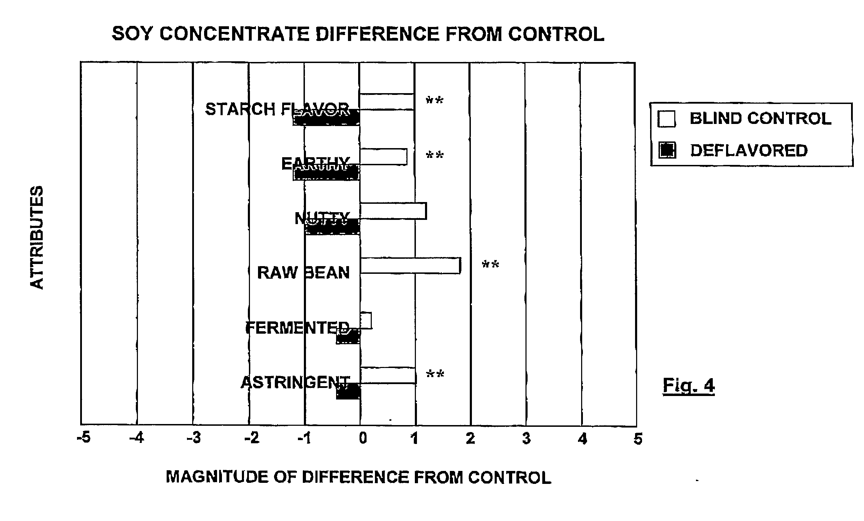

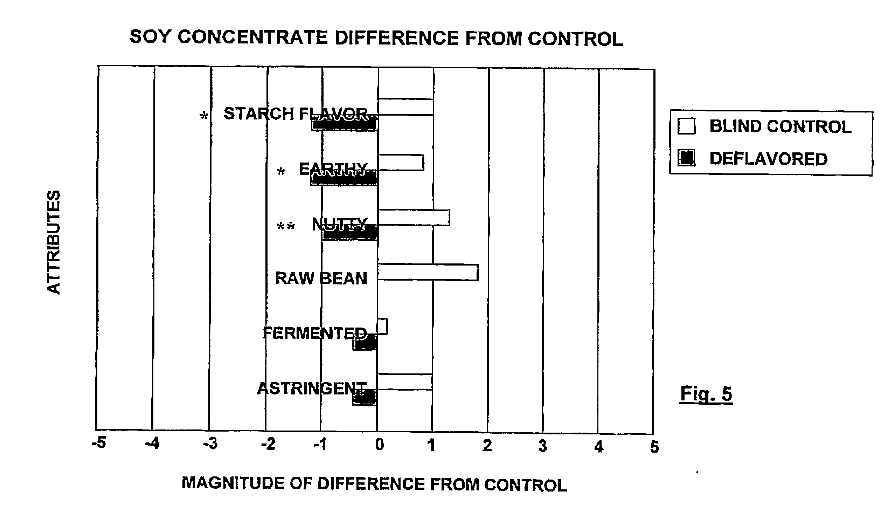

The deflavored soy protein concentrate was evaluated for six attributes by a trained sensory panel. The mean values for each attribute for the control sample (untreated) are given in FIG. 3. In this example a difference was found between the deflavored soy concentrate and the control, but none were at the 95 percent confidence level, although all the values were lower. This is shown in FIG. 4. Also included are the results of a blind control used, which was rated after the deflavored sample. In this case, the blind control was found to have stronger flavor attributes than the original control of FIG. 3. It is believed that this occurred because the blind control in this example was tested after the deflavored sample and appeared to the panel to have a relatively stronger flavor in the second evaluation of the control. However, when compared with the blind control sample, the deflavored sample showed significant differences for three of the flavor attributes at the 90 to 95 percent confidence level, as shown in FIG. 5.

**EXAMPLE 8.** The membrane used to deflavor soy proteins should have a molecular weight cutoff of 10,000 Daltons, shown to be effective in Examples 6 and 7. A higher molecular weight cutoff membrane can be used if desired, but at a molecular weight cutoff of 50,000 Daltons some valuable proteins have been lost in the permeate, as is shown in this example.

Five pounds (2,27 kg) is a dry soy isolate (Supro-670 PTI) was mixed with 95 pounds (43.2 kg) of water as in Example 7 to provide a slurry containing 5 percent soy solids. 1 N NaOH was added to raise the pH to 11 and solubilize the soy proteins. Diafiltration using five additions of water was carried out in a manner similar to that described in Examples 6 and 7 and using the hollow fiber membranes of Example 6. The pH was maintained at about 9 to about 12 during diafiltration. Samples of the permeate were taken at five minute intervals, neutralized and frozen for protein analysis.

The permeate samples were analyzed for total protein content by electrophoresis, with the results shown in the following table:

**TABLE A:**

| | Molecular Weight Cutoff | |
|---|---|---|
| Time (minutes) | 10,000 Daltons | 50,000 Daltons |
| | Protein (%) | Protein (%) |
| 0 | 0 | 0.4 |
| 5 | 0.6 | 1 |
| 10 | 0,8 | 0.6 |
| 15 | 0.4 | 0.6 |
| 20 | 0.4 | 0.6 |
| 25 | 0 | 0.4 |
| 30 | 0 | 0.4 |
| 35 | 0.5 | 0.4 |
| 40 | 0 | 0.3 |
| 45 | 0 | N/A |

it can be seen that the membrane having a 10,000 Dalton cutoff retains more protein than the membrane having a 50,000 Dalton cutoff. The value at 35 minutes for the 10,000 Dalton membrane is believed to be erroneous.

**EXAMPLE 9**. Samples of soy materials deflavored using the methods of Examples 6-8 were analyzed by protein gel electrophoresis. The results indicate that the molecular weight distribution of the retained soy materials was substantially the same as that of the original soy material. The results are shown in the following table:

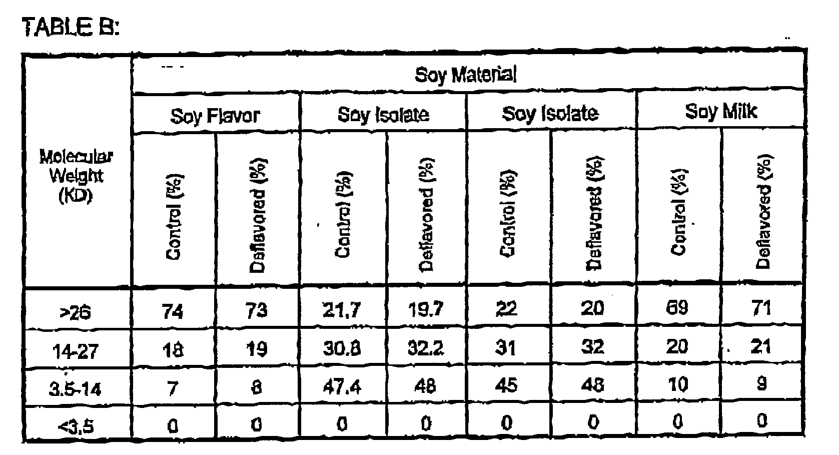

**EXAMPLE 10.** Analysis were carried out for the chemical constituents associated with the flavor attributes determined by the sensory panels described in previous examples. Two samples of soy protein isolates were tested. One sample had been deflavored by the method described in Example 7; the second sample had not been deflavored.

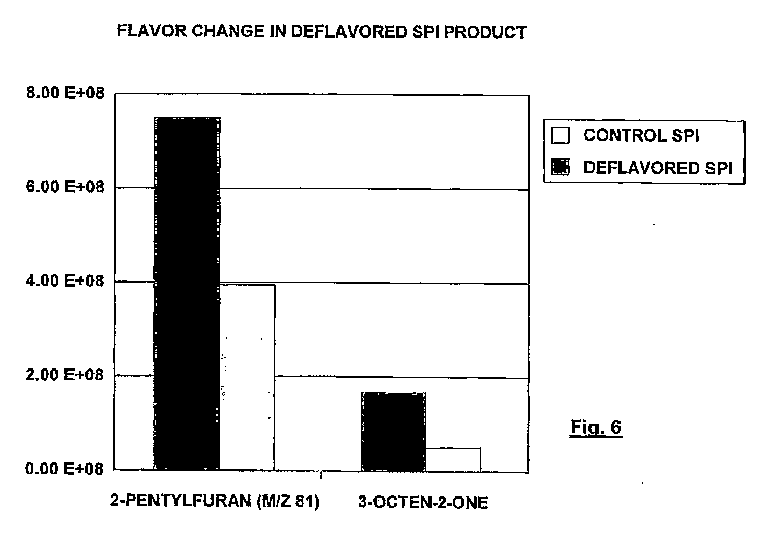

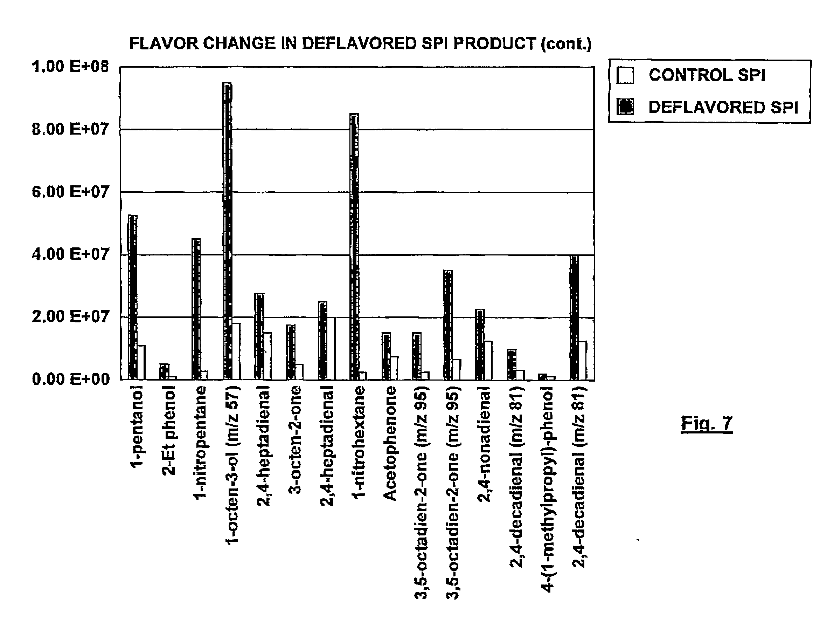

In a first test, one gram of a control sample was diluted with 15 g of water, 2 µl of 300 ppm of 4-heptanone was added as an internal standard, and the mixture was purged with 100 ml/min of helium at 60°C for 30 min. A deflavored sample was prepared similarly as the control sample, except that the pH was raised to 10 by adding a NaOH solution in order to solubilize the proteins. The volatile compounds were analyzed by GC/MS (HP GC5890/MSD5972). The results for various compounds are shown in FIGS. 6 and 7. The deflavored soy sample contained smaller amounts of the flavoring compounds.

In a second test, three gram samples were diluted with 30 g of water and 2 µl of 300 ppm 4-heptanone was added as an internal standard. The resulting mixtures were purged with 100 ml/min of helium at 60°C for 20 min to remove the volatile compounds. The volatiles were analyzed by gas chromatography and the odor of the compounds judged by human criteria. The odors associated with specific chemical compounds are reported in the following table:

**TABLE C: Odor Characteristics of Decreased Compounds After Deflavoring Process.**

| Compound | Odor in SPI Control | Odor in Deflavored SPI |
|---|---|---|
| 1-pentanol | faint, green | weakly fatty |
| 2-ethylphenol | spicy, herbaceous | ND |
| 1-nitropentane | ND | ND |
| 1-octon-3-ol | mushroom, earthy, very strong | mushroom, earthy, strong |
| *cis*-2,4-heptadienal | ND | ND |
| *cis*-3-octen-2-one | ND | ND |
| *trans*-2,4-heptadienal | ND | weak green |
| acetophenone | burnt floral, caramel | burnt, caramel |
| cis, trans-3,5-octadien-2-one | ND | ND |
| trans, trans-3,5-octadien-2-one | green, floral, fatty | fatty, green |
| 2,4-nortadienal | fatty, oily, deep-fried | fatty, oily, deep-fried |
| cis-2,4-decadienal | fatty, oily, musty | green onion, painty |
| 4-(1-methylpropyl)-phenol | bubblegum, fruity | ND |
| trans-2,4-ttecadienal | fatty, oily waxy | fatty, oily, green |
| 2-pentylfuran | green, floral, etherous | green, floral, etherous |
| trans-3-octen-2-one | floral, green, earthy | floral |

**EXAMPLE 11.** Application of soy materials to food products was illustrated by adding deflavored soy material to a Balance Bar® (Kraft Foods) and comparing the flavor with an equivalent Balance Bar® containing the same soy material, but which had not been deflavored. In one sample all of the soy material was a dry soy isolate (Supro-661 PTI), in the second sample 50 percent of the soy material had been deflavored by the diafiltration process of the examples and 50 percent was not deflavored. A taste panel preferred the second sample 8 to 3, scoring 6.11 on a scale of 1-10 (with10 being the best), versus a score of 3.5 for the first sample. Although the nutritional bar containing the deflavored soy material was preferred in the taste test, it is expected to have a somewhat limited shelf life due to the tendency of the soy material (whether deflavored or not) to bind water due to their high water binding capacity. Thus, over time, the texture of the nutritional bar is expected to become too firm or hard, thereby limiting shelf life. As demonstrated in Examples 14, 15, 17, 20, and 21 below, this problem can be overcome by restricting at least a portion of the deflavored soy material to coatings or discrete bits within the nutritional bar whereby the deflavored soy material's ability to bind water is limited.

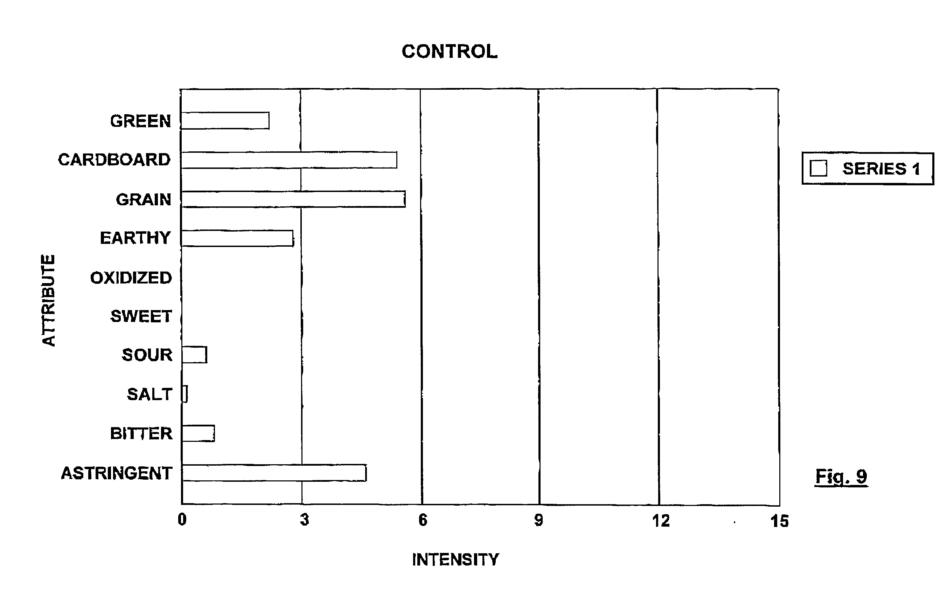

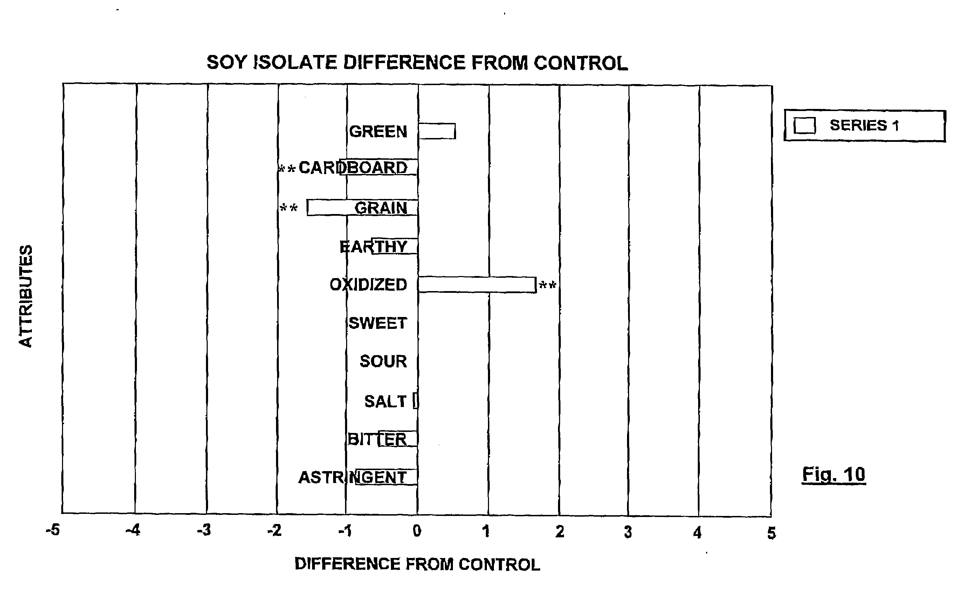

**EXAMPLE 12**. In a manner similar to Example 6, samples of soy isolate were compared, deflavored according to the process of the invention and the control sample of soy isolate, concentrated in proteins was hydrated in water to a 10 percent solution. FIG. 9 shows the results found by a trained sensory panel for the control sample. The deflavored sample was compared to the control by the panel, which found, as can be seen in FIG. 10, that many of the characteristic attributes of the control sample had been reduced. However, It was found that the flavor designated oxidized had increased.

**EXAMPLE 13.** This example illustrates the production of deflavored soy protein using soy isolate. A commercial soy isolate (30 Ibs; supro^{™} 661; Protein Technologies International, Inc., St. Louis, MO) was hydrated with 270 Ibs water. Once completely hydrated, 1 N NaOH was added to adjust the pH to 10. The alkalized soy slurry was passed through a ultrafiltration membrane (spiral wound type with 10,000 molecular weight cut-off). Diafiltration was applied while retentate was recirculated back into the tank and water was added to the tank at a rate sufficient to replace water removed with permeate. The pH was maintained at about 9 to about 12 during ultrafiltration. Ultrafiltration/diafiltration was continued until the amount of permeate removed was about 2.5 times the starting batch size. Citric acid (1 %) was slowly added to adjust the pH to 6.5. Ultrafiltration was then continued to achieve a solids level of about 12 to 13 percent. The resulting slurry was spray dried to obtain a powdered defavored soy protein material.

**Example 14.** Nutritional bars were prepared using the formulations in the table below. The nutritional bars contained three layers: chocolate coating, caramel layer, and core, in that order and were prepared using conventional techniques. The soy protein isolate was incorporated into the core layer.

| | Amount(%) | |
|---|---|---|
| Ingredient | Control | inventive |
| Caramel | 28 | 28 |
| Chocolate Coating (sugar, fractionated palm kernel oil, milk protein concentrate, cocoa powder, lecithin, vanilla extract) | 19 | 19 |
| Glycerin | 10 | 10 |
| Acid Casein | 8 | 8 |
| Peanuts | 7 | 7 |
| Whey Protein Isolate | 6 | 6 |
| Gelatin | 6 | 6 |
| Soy Protein Isolate | 0 | 2 |
| Soy Protein Isolate (Untreated Supro^{™} 661 from Example 13) | 4 | 0 |
| Soy Protein Isolate (Deflavored Supro^{™} 661 from Example 13) | 0 | 2 |
| Maltitol Syrup | 3 | 3 |
| High Maltose Com Syrup | 2 | 2 |
| Peanut Flour | 2 | 2 |
| Flavors | 1.5-3.0 | 1.5-3.0 |
| Emulsifier (lecithin) | 0.1-0.8 | 0.1-0.6 |
| 23 Vitamin/Mineral Premix | 0.5-1.0 | 0.5-1.0 |

The control and inventive bars were evaluated by a trained taste panel (10 members) on a scale of 1 to 10 with 10 being most preferred. The panel evaluated flavor (especially for off-flavors normally associated with soy), texture, and overall liking. The inventive bar received an overall score of 6.1 compared to the control's score of 3.5.

**Example 15.** Additional nutritional bars were prepared using the procedures as described in Example 14 but using soy protein isolate from different sources. Soy protein isolates, Profam^{™} 781 from Archer Midland Daniels (AMD; Decatur, Illinois) and Surpo^{™} 710 from Protein Technologies International, Inc., were deflavored using the procedure of Example 13. The resulting deflavored soy protein samples both had densities of about 0.7 g/ml. The following formulations were used to prepare the nutritional bars:

| | Amount(%) | |
|---|---|---|
| Ingredient | Inventive#1 | Inventive #2 |
| Caramel | 28 | 28 |
| Chocolate coating (sugar, fractionated palm kernel oil, milk protein concentrate, cocoa powder, lecithin, vanilla extract) | 19 | 19 |
| Glycerin | 10 | 10 |
| Acid Casein | 8 | 8 |
| Peanuts | 7 | 7 |
| Whey Protein Isolate | 6 | 6 |
| Gelatin | 6 | 6 |
| Soy Protein Isolate (Deflavored Supro^{™} 710) | 4 | 0 |
| Soy Protein Isolate (Deflavored Profam 781) | 0 | 4 |
| Maltitol syrup | 3 | 3 |
| High Maltose Com Syrup | 2 | 2 |
| Peanut Flour | 2 | 2 |
| Flavors | 1.5 - 3.0 | 1.5-3.0 |
| Emulsifier (lecithin) | 0.1 - 0.8 | 0.1 - 0.8 |
| 23 Vitamin/Mineral Premix | 0.5 - 1.0 | 0.5 - 1.0 |

Both nutritional bars had excellent organoleptic properties and were superior to control samples prepared using untreated soy protein isolate.

**Example 16.** This example illustrates the incorporation of deflavored soy protein in a cereal based nutritional bar. A nutritional bar was prepared with the following formulation: 30 percent brown rice syrup; 27 percent soy nuggets; 10 percent crisp rice; 7 percent oats; 6 percent glycerin; 6 percent sugar; 5 percent soy protein isolate; 1 to 2 percent flavors; 0.2 to 0.8 percent emulsifier (lecithin); and 2 to 4 percent of a 23 vitamins/mineral premix. The soy protein isolate was blended with the syrup to form a binder syrup which was then blended with the remaining ingredients. Bars were prepared using conventional techniques. Control and inventive samples were prepared using untreated and deflavored soy protein isolate, respectively, from Example 13. Both control and inventive samples were evaluated as prepared and in an accelerated shelf life study at 90°F. The products with the deflavored soy protein had a cleaner flavor than the control with no detectable off-flavors normally associated with soy. Over time, the control bar showed a significant drop in overall quality, especially texture, as compared with little change in the inventive product over a period equivalent to at least about 6 to about 9 months of ambient storage.

**Example 17**. This example illustrates the production of a chocolate composition containing up to 20 percent soy protein using the deflavored soy isolate prepared in Example 15. The chocolate composition had the following formulation:

| Ingredient | Amount (%) |
|---|---|
| Fractionated Palm Oil | 35.0 |
| Cocoa Powder | 9.9 |
| Sugar | 34.6 |
| Deflavored Soy Isolate (powdered) | 19.8 |
| Soy Lecithin | 0.3 |

The chocolate was prepared in a jacketed reactor equipped with a circulating water bath at 80°C and an overhead stirrer. The palm oil and soy lecithin were heated in the reactor to about 80°C. A dry blend of the remaining ingredients were slowly added into the stirred mixture until completely blended. Mixing at 80°C was continued for four hours. The chocolate composition was then poured onto a flat surface and allowed to cool (and harden) over night. The chocolate composition had good chocolate flavor and mouthfeel and could be used in various chocolate or chocolate-containing products.

Using a chocolate mill, the chocolate was milled to an average particle size of less than about 10 microns. The milled chocolate had good melting properties and flowability comparable to chocolate prepared without the soy proteins. A nutritional bar was coated with the melted chocolate composition; the coating was even and homogenous with a thickness of about 500 microns. The resulting chocolate coated nutritional bar had good handability with mouthfeel and other organoleptic properties similar to a control sample (i.e., similar nutritional bar coated with chocolate prepared with the soy proteins) and supplied about 1.8 g of soy protein per bar.

**Example 18.** A similar chocolate composition as descried in Example 17 was prepared in the same manner except that mixing of the composition was continued for only 30 minutes. The resulting chocolate composition had poorer meltability relative to the composition of Example 17 and had a relatively high viscosity (resembling chocolate icing) and a slightly grainy texture. Although this composition is not ideally suited for coating operations, it could be used for other applications in confectionary products (e.g., chocolate bits distributed throughout confectionary products).

**Example 19.** This example illustrates the incorporation of deflavored soy protein in a commercial chocolate coating composition. The composition was prepared by blending about 20 percent of the deflavored soy protein as prepared in Example 15 in a chocolate coating composition from Kerry Ingredients (Kerry 101976; Beloit, WI) melted in a jacketed reactor as described in Example 17 at 80°C for about 4 hours to obtain a homogeneous mixture. The resulting composition had excellent melting and flow properties and taste comparable to a control sample prepared without soy protein.

**Example 20.** Chocolate coatings containing deflavored soy protein were prepared as in Example 19 except that fat and lecithin were added to reduce coating viscosity. A chocolate coating containing 72.6 percent Kerry chocolate coating (as described in Example 19), 18.2 percent deflavored soy protein (as described in Example 19), 9 percent fractionated palm oil, and 0.1 percent soy lecithin was prepared as in Example 19. This chocolate coating also exhibited good handleability.

**Example 21.** This example illustrates the preparation of several caramel compositions containing deflavored soy proteins (prepared from soy protein isolate Surpo^{™} 710 from Protein Technologies International, Inc. as described in Example 15). The two caramel samples had the following formulations:

| | Amount(%) | |
|---|---|---|
| Ingredient | Sample 1 | Sample 2 |
| High Fructose Com Syrup (42DE) | 46.4 | 46,4 |
| Water | 9.3 | 9.3 |
| Salt | 1.0 | 1.0 |
| Sugar | 18.6 | 16.6 |
| Sutter | 9.3 | - |
| Fractionated Palm Oil | - | 9.3 |
| Deflavored Soy Protein Isolate | 15.5 | 15.5 |

Water, corn syrup, sugar, and salt were mixed using a whisk. The deflavored soy isolate was added; mixing was continued until the soy isolate was hydrated. The resulting mixture was then heated slowly to about 80°F with vigorous mixing. Premelted fat (butter or palm oil) was then added and the mixture cooked under moderate heat until most of the moisture had been removed (generally about 30 to about 120 minutes, depending on batch size). Cooking was continued until the sugars started to caramelize. The mixture was then removed from the heat source and allowed to cool with vigorous mixing. The product was then poured onto a flat surface and allowed to cool.

The caramel produced could be used alone as a confectionary product or incorporated into various confectionary products (e.g., nutritional or other bars, candies, chewables, and the like).

The caramels (Samples 1 and 2) were incorporated into nutritional bars a single layer on top of the core layer to provide about 5.5 percent soy protein based on the total weight of the bars. Taste, texture, and other organoleptic properties were similar to control samples (i.e., similar nutritional bars without added soy protein).

## Claims

1. A soy-containing confectionary product comprising a deflavored soy protein material, wherein the deflavored soy protein material is prepared by a method comprising:
(a) preparing an aqueous composition of a soy material containing soluble soy proteins, flavoring compounds, and Insoluble materials;
(b) solubilizing the soy proteins by adjusting the aqueous composition of (a) to a pH in the range of 9 to 12 and releasing the flavoring compounds;
(c) passing the pH-adjusted aqueous composition of (b) adjacent an ultrafiltration membrane having a molecular weight cutoff up to about 50,000 Daltons, while maintaining the pH in the range of 9 to 12, under suitable ultrafiltration conditions wherein the flavor compounds pass through the membrane, thereby deflavoring the soy material and retaining substantially all of the solubilized soy proteins; and
(d) recovering the solubilized soy proteins retained by the ultrafiltration membrane, wherein the recovered solubilized soy proteins is the deflavored soy protein material.

2. The confectionary product of Claim 1, wherein the deflavored soy protein material is a solid having a density of 0.4 to 0.9 g/ml.

3. The confectionary product of Claim 1 or Claim 2, wherein the confectionary product is a nutritional bar having the deflavored soy protein material dispersed throughout.

4. The confectionary product of any one of Claims 1 to 3, wherein the confectionary product is a nutritional bar having one or more discrete layers covering or within the confectionary product or a plurality of discrete components dispersed throughout the confectionary product, wherein the one or more discrete layer or plurality of components contain the soy protein material such that the soy protein material does not adversely effect texture of the confectionary product.

5. The confectionary product of any one of Claims 1 to 4, wherein the soy material is at least one member of the group consisting of soy milk, soy protein isolate, soy concentrate, and soy flour.

6. The confectionary product of any one of Claims 1 to 5, wherein the aqueous composition of (a) has a concentration of soy material in the range of 1 to 20 percent.

7. The confectionary product of any one of Claims 1 to 6, wherein the ultrafiltration membrane has a cutoff in the range of 1,000 to 50,000 Daltons.

8. The confectionary product of any one of Claims 1 to 7, wherein the ultrafiltration membrane has a cutoff in the range of 10,000 to 30,000 Daltons.

9. The confectionary product of any one of Claims 1 to 8, wherein the ultrafiltration is carried out at a temperature in the range of 10°C to 60°C and at a suitable pressure.

10. The confectionary product of any one of Claims 1 to 9, wherein the ultrafiltration membrane is a polymer, ceramic, or inorganic membrane.

11. The confectionary product of any one of Claims 1 to 10, wherein the confectionary product is a nutritional bar comprising a core and at least one chocolate layer or at least one caramel layer and wherein the soy protein material is contained within the at least one chocolate layer or the at least one caramel layer.

## Patentansprüche

1. Sojahaltiges Süßwarenprodukt mit einem geschmacksentzogenem Sojaproteinmaterial, das durch ein Verfahren hergestellt ist, bei dem man
(a) eine wässrige Zusammensetzung eines Sojamaterials herstellt, das lösliche Sojaproteine, Geschmacksverbindungen und unlösliche Materialien enthält,
(b) die Sojaproteine **dadurch** löslich macht, daß man die wässrige Zusammensetzung von (a) auf einen pH in dem Bereich von 9 bis 12 einstellt und die Geschmacksverbindungen freisetzt,
(c) die pH-eingestellte wässrige Zusammensetzung von (b) an einer Ultrafiltrationsmembran mit einer Molekulargewichtsgrenze bis zu etwa 50.000 Dalton bei Einhaltung des pH in dem Bereich von 9 bis 12 unter geeigneten Ultrafiltrationsbedingungen vorbeigehen läßt, wobei die Geschmacksverbindungen durch die Membran hindurchgehen, wodurch dem Sojamaterial Geschmack entzogen wird und im wesentlichen alle löslich gemachten Sojaproteine zurückgehalten werden, und
(d) die von der Ultrafiltrationsmembran zurückgehaltenen, löslich gemachten Sojaproteine gewinnt, wobei die gewonnenen, löslich gemachten Sojaproteine das geschmacksentzogene Sojaproteinmaterial

2. Süßwarenprodukt des Anspruchs 1, bei dem das geschmacksentzogene Sojaproteinmaterial ein Feststoff mit einer Dichte von 0,4 bis 0,9 g/ml ist.

3. Süßwarenprodukt des Anspruchs 1 oder Anspruchs 2, das ein Ernährungsriegel mit dem darin dispergierten, geschmacksentzogenen Sojaproteinmaterial ist.

4. Süßwarenprodukt eines der Ansprüche 1 bis 3, das ein Ernährungsriegel mit einer oder mehreren einzelnen Schichten, die das Süßwarenprodukt bedecken oder sich in ihm befinden, oder mit mehreren in dem Süßwarenprodukt dispergierten einzelnen Bestandteilen, wobei die eine oder die mehreren einzelne(n) Schicht(en) oder die Mehrzahl der Bestandteile das Sojaproteinmaterial enthalten, so daß das Sojaproteinmaterial das Gefüge des Süßwarenprodukts nicht beeinträchtigt.

5. Süßwarenprodukt eines der Ansprüche 1 bis 4, bei dem das Sojamaterial wenigstens ein Bestandteil der aus Sojamilch, Sojaproteinisolat, Sojakonzentrat und Sojamehl bestehenden Gruppe ist.

6. Süßwarenprodukt eines der Ansprüche 1 bis 5, bei dem die wässrige Zusammensetzung von (a) eine Konzentration des Sojamaterials in dem Bereich von 1 bis 20 Prozent hat.

7. Süßwarenprodukt eines der Ansprüche 1 bis 6, bei dem die Ultrafiltrationsmembran eine Grenze in dem Bereich von 1.000 bis 50.000 Dalton hat.

8. Süßwarenprodukt eines der Ansprüche 1 bis 7, bei dem die Ultrafiltrationsmembran eine Grenze in dem Bereich von 10.000 bis 30.000 Dalton hat.

9. Süßwarenprodukt eines der Ansprüche 1 bis 8, bei dem die Ultrafiltration bei einer Temperatur in dem Bereich von 10 bis 60°C und bei einem geeigneten Druck durchgeführt wird.

10. Süßwarenprodukt eines der Ansprüche 1 bis 9, bei dem die Ultrafiltrationsmembran eine polymere, keramische oder anorganische Membran ist.

11. Süßwarenprodukt eines der Ansprüche 1 bis 10, bei dem das Süßwarenprodukt ein Ernährungsriegel mit einem Kern und wenigstens einer Schokoladenschicht oder wenigstens einer Karamellschicht ist und bei dem das Sojaproteinmaterial in der wenigstens einen Schokoladenschicht oder der wenigstens einen Karamellschicht enthalten ist.

## Revendications

1. Produit de confiserie contenant du soja comprenant un matériau protéique de soja désaromatisé, dans lequel le matériau protéique de soja désaromatisé est préparé par un procédé comprenant :
(a) la préparation d'une composition aqueuse d'un matériau de soja contenant des protéines de soja solubles, des composés aromatisants, et des matériaux insolubles ;
(b) la solubilisation des protéines de soja par ajustement du pH de la composition aqueuse de (a) à une valeur dans la plage de 9 à 12 et la libération des composés aromatisants ;
(c) le passage de la composition aqueuse à pH ajusté de (b) sur une membrane d'ultrafiltration ayant un seuil de coupure moléculaire atteignant environ 50 000 daltons, tout en maintenant le pH dans la plage de 9 à 12, dans des conditions d'ultrafiltration adaptées dans lesquelles les composés aromatisants passent à travers la membrane, désaromatisant ainsi le matériau de soja et retenant la quasi totalité des protéines de soja solubilisées ; et
(d) la récupération des protéines de soja solubilisées retenues par la membrane d'ultrafiltration, les protéines de soja solubilisées récupérées constituant le matériau protéique de soja désaromatisé.

2. Produit de confiserie selon la revendication 1, dans lequel le matériau protéique de soja désaromatisé est un solide ayant une masse volumique de 0,4 à 0,9 g/mL.

3. Produit de confiserie selon la revendication 1 ou la revendication 2, dans lequel le produit de confiserie est une barre nutritionnelle dans laquelle est dispersé le matériau protéique de soja désaromatisé.

4. Produit de confiserie selon l'une quelconque des revendications 1 à 3, dans lequel le produit de confiserie est une barre nutritionnelle ayant une ou plusieurs couches discrètes couvrant le ou à l'intérieur du produit de confiserie ou une pluralité de composants discrets dispersés dans le produit de confiserie, la ou les couches discrètes ou la pluralité de composants contenant 1c matériau protéique de soja de telle manière que le matériau protéique de soja n'affecte pas de manière négative la texture du produit de confiserie.

5. Produit de confiserie selon l'une quelconque des revendications 1 à 4, dans lequel le matériau de soja est au moins un élément du groupe constitué par le lait de soja, un isolat de protéine de soja, un concentré de soja, et la farine de soja.

6. Produit de confiserie selon l'une quelconque des revendications 1 à 5, dans lequel la composition aqueuse de (a) a une concentration en matériau de soja dans la plage de 1 à 20 %.

7. Produit de confiserie selon l'une quelconque des revendications 1 à 6, dans lequel la membrane d'ultrafiltration a un seuil de coupure dans la plage de 1 000 à 50 000 daltons.

8. Produit de confiserie selon l'une quelconque des revendications 1 à 7, dans lequel la membrane d'ultrafiltration a un seuil de coupure dans la plage de 10 000 à 30 000 daltons.

9. Produit de confiserie selon l'une quelconque des revendications 1 à 8, dans lequel l'ultrafiltration est réalisée à une température dans la plage de 10 °C à 60 °C et à une pression adaptée.

10. Produit de confiserie selon l'une quelconque des revendications 1 à 9, dans lequel la membrane d'ultrafiltration est une membrane polymère, céramique ou minérale.

11. Produit de confiserie selon l'une quelconque des revendications 1 à 10, dans lequel le produit de confiserie est une barre nutritionnelle comprenant un coeur et au moins une couche de chocolat ou au moins une couche de caramel et dans lequel le matériau protéique de soja est contenu à l'intérieur de ladite au moins une couche de chocolat ou de ladite au moins une couche de caramel.
